# EUROPÄISCHE PATENTANMELDUNG

(11) **EP 4 549 709 A1**
(43) Veröffentlichungstag der Anmeldung: **07.05.2025**
(21) Anmeldenummer: 24201653.3
(22) Anmeldetag: 20.09.2024
(51) Int. Cl.: F01N 3/08

(54) **VERFAHREN ZUM BETREIBEN EINER ANTRIEBSEINRICHTUNG FÜR EIN KRAFTFAHRZEUG, ANTRIEBSEINRICHTUNG FÜR EIN KRAFTFAHRZEUG SOWIE COMPUTERPROGRAMMPRODUKT**

(30) Priorität: 29.09.2023 DE 102023209590
(71) Anmelder: AUDI AG, 85057 Ingolstadt (DE)
(72) Erfinder: ODENDALL, Bodo, 85101 Lenting (DE)
(74) Vertreter: Dietz, Christopher Friedrich

(57) **Zusammenfassung**

Die Erfindung betrifft ein Verfahren zum Betreiben einer Antriebseinrichtung (1) für ein Kraftfahrzeug, die über ein Abgas erzeugendes und als Otto-Brennkraftmaschine ausgestaltetes Antriebsaggregat (2) sowie eine Abgasnachbehandlungseinrichtung (4) zur Nachbehandlung des Abgases mit einem ersten Fahrzeugkatalysator (5) und einem strömungstechnisch in Reihe mit dem ersten Fahrzeugkatalysator (5) geschalteten zweiten Fahrzeugkatalysator (6) verfügt. Dabei ist vorgesehen, dass nach einem Betreiben des Antriebsaggregats (2) mit einem mageren Kraftstoff-Frischgas-Gemisch über eine bestimmte erste Zeitspanne hinweg das Antriebsaggregat (2) zum Einstellen eines Istfüllstands eines Sauerstoffspeichers des ersten Fahrzeugkatalysators (5) in Richtung eines zur Reduzierung einer Stickoxidemission der Antriebseinrichtung (1) gewählten Sollfüllstands über eine bestimmte zweite Zeitspanne hinweg mit einem fetten Kraftstoff-Frischgas-Gemisch betrieben wird, wobei die zweite Zeitspanne in Abhängigkeit von mindestens einer Zustandsgröße der Fahrzeugkatalysatoren (5, 6) zur Reduzierung einer Ammoniakemission der Antriebsrichtung (1) gewählt wird. Die Erfindung betrifft weiterhin eine Antriebseinrichtung (1) für ein Kraftfahrzeug sowie ein Computerprogrammprodukt.

## Beschreibung

Die Erfindung betrifft ein Verfahren zum Betreiben einer Antriebseinrichtung für ein Kraftfahrzeug, die über ein Abgas erzeugendes und als Otto-Brennkraftmaschine ausgestaltetes Antriebsaggregat sowie eine Abgasnachbehandlungseinrichtung zur Nachbehandlung des Abgases mit einem ersten Fahrzeugkatalysator und einem strömungstechnisch in Reihe mit dem ersten Fahrzeugkatalysator geschalteten zweiten Fahrzeugkatalysator verfügt. Die Erfindung betrifft weiterhin eine Antriebseinrichtung für ein Kraftfahrzeug sowie ein Computerprogrammprodukt.

Aus dem Stand der Technik ist beispielsweise die Druckschrift DE 10 2021 205 798 A1 bekannt. Diese beschreibt ein Verfahren zum Betreiben einer Abgasnachbehandlungsanlage einer Brennkraftmaschine mit zumindest einem ersten Speicherkatalysator und einem stromabwärts des ersten Speicherkatalysators angeordneten zweiten Speicherkatalysator, die jeweils einen Sauerstoffspeicher umfassen, umfassend ein Ermitteln eines ersten Betriebsparameters des ersten Katalysators und eines zweiten Betriebsparameters des zweiten Katalysators, ein Einstellen eines Sauerstoffgehalts eines dem ersten Katalysator zugeführten Abgases in Abhängigkeit von dem ersten Betriebsparameter, und ein Einstellen eines Sauerstoffgehalts eines dem zweiten Katalysator zugeführten Abgases stromabwärts des ersten Katalysators in Abhängigkeit von dem zweiten Betriebsparameter.

Es ist Aufgabe der Erfindung, ein Verfahren zum Betreiben einer Antriebseinrichtung für ein Kraftfahrzeug vorzuschlagen, welches gegenüber bekannten Verfahren Vorteile aufweist, insbesondere eine effektive Nachbehandlung des Abgases sicherstellt, beispielsweise auch nach einem Schubbetrieb der Antriebseinrichtung.

Dies wird erfindungsgemäß mit einem Verfahren zum Betreiben einer Antriebseinrichtung für ein Kraftfahrzeug mit den Merkmalen des Anspruchs 1 erreicht. Dabei ist vorgesehen, dass nach einem Betreiben des Antriebsaggregats mit einem mageren Kraftstoff-Frischgas-Gemisch über eine bestimmte erste Zeitspanne hinweg das Antriebsaggregat zum Einstellen eines Istfüllstands eines Sauerstoffspeichers des ersten Fahrzeugkatalysators in Richtung eines zur Reduzierung einer Stickoxidemission der Antriebseinrichtung gewählten Sollfüllstands über eine bestimmte zweite Zeitspanne hinweg mit einem fetten Kraftstoff-Frischgas-Gemisch betrieben wird, wobei die zweite Zeitspanne in Abhängigkeit von wenigstens einer Zustandsgröße der Fahrzeugkatalysatoren zur Reduzierung einer Ammoniakemission der Antriebseinrichtung gewählt wird.

Vorteilhafte Ausgestaltungen mit zweckmäßigen Weiterbildungen der Erfindung sind in den abhängigen Ansprüchen angegeben. Es wird darauf hingewiesen, dass die in der Beschreibung erläuterten Ausführungsbeispiele nicht beschränkend sind; vielmehr sind beliebige Variationen der in der Beschreibung, den Ansprüchen sowie den Figuren offenbarten Merkmale realisierbar.

Die Antriebseinrichtung dient dem Antreiben des Kraftfahrzeugs, insoweit also dem Bereitstellen eines auf das Antreiben des Kraftfahrzeugs gerichteten Antriebsdrehmoments. Zum Bereitstellen des Antriebsdrehmoments weist die Antriebseinrichtung das Antriebsaggregat auf. Das Antriebsaggregat liegt als Brennkraftmaschine vor, genauer gesagt als Otto-Brennkraftmaschine. Dem Antriebsaggregat werden während eines Betriebs der Antriebseinrichtung zumindest zeitweise Kraftstoff und Frischgas zugeführt, wobei der Kraftstoff vorzugsweise als Benzin vorliegt und das Frischgas zumindest zeitweise Frischluft enthält. Zusätzlich kann das Frischgas Abgas aufweisen, sofern eine Abgasrückführung realisiert ist, bei welcher das von dem Antriebsaggregat erzeugte Abgas zumindest teilweise wieder in das Antriebsaggregat zurückgeführt wird, nämlich als Bestandteil des Frischgases. Der Kraftstoff und das Frischgas, die dem Antriebsaggregat zugeführt werden, bilden ein Kraftstoff-Frischgas-Gemisch mit einer bestimmten Zusammensetzung, das in dem Antriebsaggregat zur Reaktion gebracht wird.

Während des Betriebs des Antriebsaggregats fällt aufgrund der chemischen Reaktion von Kraftstoff und Frischgas miteinander Abgas an, welches in Richtung einer Außenumgebung der Antriebseinrichtung beziehungsweise des Kraftfahrzeugs abgeführt wird. Da in dem von dem Antriebsaggregat erzeugten Abgas Schadstoffe enthalten sind, wird das Abgas vor dem Entlassen in die Außenumgebung zunächst der Abgasnachbehandlungseinrichtung zugeführt. In der Abgasnachbehandlungseinrichtung werden die Schadstoffe zumindest teilweise in ungefährlichere Produkte umgesetzt. Erst nach dem Durchlaufen der Abgasnachbehandlungseinrichtung wird das Abgas in die Außenumgebung abgeführt, beispielsweise durch ein Endrohr der Antriebseinrichtung.

Die Abgasnachbehandlungseinrichtung verfügt über mehrere Fahrzeugkatalysatoren, welche strömungstechnisch in Reihe geschaltet sind. Der erste Fahrzeugkatalysator liegt beispielsweise als Drei-Wege-Katalysator, Oxidationskatalysator, NOₓ-Speicherkatalysator oder SCR-Katalysator vor. Besonders bevorzugt ist der erste Fahrzeugkatalysator in einen Partikelfilter integriert, insbesondere in einen Otto-Partikelfilter. Hierzu ist zum Beispiel der Partikelfilter mit einer katalytischen Beschichtung versehen. Zusätzlich oder alternativ liegt der zweite Fahrzeugkatalysator als Drei-Wege-Katalysator, Oxidationskatalysator, NOₓ-Speicherkatalysator oder SCR-Katalysator vor. Auch der zweite Fahrzeugkatalysator ist optional in einen Partikelfilter integriert, bevorzugt einen Otto-Partikelfilter. Besonders bevorzugt sind der erste Fahrzeugkatalysator und der zweite Fahrzeugkatalysator von demselben Typ, liegen also beide jeweils als Drei-Wege-Katalysator, Oxidationskatalysator, NOₓ-Speicherkatalysator oder SCR-Katalysator vor und sind optional jeweils in einen Partikelfilter integriert.

Eine Umwandlungsrate und damit die Konvertierungsleistung der Abgasnachbehandlungseinrichtung, mit welcher die Schadstoffe in die ungefährlicheren Produkte umgesetzt werden, hängen insbesondere von der Zusammensetzung des der Abgasnachbehandlungseinrichtung zugeführten Abgases und der Temperatur der Abgasnachbehandlungseinrichtung ab. Die Bestandteile des von dem Antriebsaggregat erzeugten Abgases werden auch als Rohemission bezeichnet. Die Rohemission beschreibt insoweit die Zusammensetzung des Abgases stromaufwärts der Abgasnachbehandlungseinrichtung beziehungsweise strömungstechnisch zwischen dem Antriebsaggregat und der Abgasnachbehandlungseinrichtung. Die in dem Abgas enthaltenen Stoffe werden bei dem Durchlaufen der Abgasnachbehandlungseinrichtung durch das Abgas teilweise umgewandelt, sodass sich die Zusammensetzung des Abgases ändert. Die stromabwärts der Abgasnachbehandlungseinrichtung in dem Abgas vorliegenden Stoffe, aus welchen sich das Abgas zusammensetzt, werden auch als Endrohremission bezeichnet, da das Abgas mit dieser Zusammensetzung durch das Endrohr der Antriebseinrichtung in die Außenumgebung entlassen wird.

Die Menge der in der Endrohremission enthaltenen Schadstoffe hängt, wie bereits erwähnt, von der Rohemission ab, zusätzlich jedoch auch von der Konvertierungsleistung der Abgasnachbehandlungseinrichtung. Diese ist unter anderem temperaturabhängig. Insbesondere ist die Konvertierungsleistung umso niedriger, je weiter eine Temperatur der Abgasnachbehandlungseinrichtung von der Betriebstemperatur der Abgasnachbehandlungseinrichtung beabstandet ist, je größer also ein Absolutwert der Differenz zwischen den Temperaturen ist. Unter der Temperatur der Abgasnachbehandlungseinrichtung ist insbesondere eine Temperatur des ersten Fahrzeugkatalysators und/oder des zweiten Fahrzeugkatalysators, beispielsweise eines keramischen Wabenkörpers des jeweiligen Fahrzeugkatalysators, zu verstehen, welcher mit der katalytischen Beschichtung versehen ist.

Der erste Fahrzeugkatalysator und der zweite Fahrzeugkatalysator sind strömungstechnisch in Reihe geschaltet. Das bedeutet, dass sowohl der erste Fahrzeugkatalysator als auch der zweite Fahrzeugkatalysator strömungstechnisch an das Antriebsaggregat angeschlossen sind, sodass das von dem Antriebsaggregat erzeugte Abgas beiden Fahrzeugkatalysatoren nacheinander zugeführt wird. Hierzu ist der Fahrzeugkatalysator lediglich mittelbar über den ersten Fahrzeugkatalysator an das Antriebsaggregat strömungstechnisch angeschlossen, sodass das Abgas ausgehend von dem Antriebsaggregat zunächst den ersten Fahrzeugkatalysator und erst anschließend den zweiten Fahrzeugkatalysator durchströmt. Besonders bevorzugt sind die beiden Fahrzeugkatalysatoren strömungstechnisch voneinander beabstandet, beispielsweise liegt zwischen ihnen eine Abgasleitung vor, welche nicht Bestandteil eines Fahrzeugkatalysators ist. Die Abgasleitung ist insoweit vorzugsweise dazu vorgesehen und ausgestaltet, das aus dem ersten Fahrzeugkatalysator austretende Abgas chemisch unverändert dem zweiten Fahrzeugkatalysator zuzuführen.

Der erste Fahrzeugkatalysator und der zweite Fahrzeugkatalysator sind zur Zwischenspeicherung von Sauerstoff vorgesehen und ausgestaltet. Hierzu weist der jeweilige Fahrzeugkatalysator einen entsprechenden Sauerstoffspeicher auf und die Fahrzeugkatalysatoren können auch als Speicherkatalysatoren bezeichnet werden. Wird das Antriebsaggregat mit dem mageren Kraftstoff-Frischgas-Gemisch betrieben, liegt als Sauerstoffüberschuss vor, so nehmen die Sauerstoffspeicher der beiden Fahrzeugkatalysatoren Sauerstoff auf, der jeweilige Istfüllstand erhöht sich also. Das magere Kraftstoff-Frischgas-Gemisch kommt insbesondere während eines Schubbetriebs der Antriebseinrichtung zum Einsatz, bei welchem das Antriebsaggregat aufgrund seiner antriebstechnische Anbindung an wenigstens eine Radachse des Kraftfahrzeugs von der kinetischen Energie des Kraftfahrzeugs angetrieben beziehungsweise angeschleppt wird, und dies bei bei geringer Kraftstoffzufuhr oder gänzlich ohne Kraftstoffzufuhr.

Allerdings ist die Konvertierungsleistung der Fahrzeugkatalysatoren für Stickoxid von dem Füllstand der Sauerstoffspeicher abhängig. Genauer gesagt ist die Konvertierungsleistung jedes der Fahrzeugkatalysatoren umso geringer, je mehr Sauerstoff in dem jeweiligen Sauerstoffspeicher zwischengespeichert ist, je größer also der Istfüllstand ist. Aus diesem Grund soll der Sauerstoff nach dem Betreiben des Antriebsaggregats mit dem mageren Kraftstoff-Frischgas-Gemisch wieder aus dem Sauerstoffspeicher ausgetragen werden, sodass sich der Istfüllstand verringert und folglich die Konvertierungsleistung für Stickoxid erhöht. Unter Stickoxid ist im Rahmen dieser Beschreibung ganz allgemein NOₓ zu verstehen, insbesondere also Stickstoffmonoxid und/oder Stickstoffdioxid.

Hierzu wird die Antriebseinrichtung mit dem fetten Kraftstoff-Frischgas-Gemisch betrieben, sodass der Istfüllstand in Richtung des Sollfüllstands angepasst wird. Der Sollfüllstand ist derart gewählt, dass nach seinem Erreichen durch den Istfüllstand das Stickoxid mit hoher Konvertierungsleistung umgewandelt werden, insbesondere reduziert werden. Das Betreiben des Antriebsaggregats mit dem fetten Kraftstoff-Frischgas-Gemisch erfolgt über die zweite Zeitspanne hinweg. Wäre lediglich die Konvertierungsleistung für das Stickoxid zu betrachten, so könnten die Sauerstoffspeicher der Fahrzeugkatalysatoren vollständig entleert werden. Allerdings entsteht während des Betreibens der Antriebseinrichtung mit dem fetten Kraftstoff-Frischgas-Gemisch Ammoniak in den Fahrzeugkatalysatoren im Rahmen der Sekundärreaktion 2 NO + 5 H₂ → 2 NH₃ + 2 H₂O.

Um einen Grenzwert für die Ammoniakemission zuverlässig einzuhalten, muss sichergestellt werden, dass nie beide Sauerstoffspeicher gleichzeitig vollständig entleert werden, insbesondere nicht der Sauerstoffspeicher des zweiten Fahrzeugkatalysators, und gleichzeitig Ammoniak in einem der Fahrzeugkatalysatoren gebildet wird. Zu diesem Zweck wird die zweite Zeitspanne in Abhängigkeit von der wenigstens einen Zustandsgröße der Fahrzeugkatalysatoren derart gewählt, dass die Ammoniakemission der Antriebseinrichtung reduziert wird, insbesondere kleiner ist als der Grenzwert. Die zweite Zeitspanne wird hierbei derart gewählt, dass eine möglichst gute Konvertierungsleistung der Abgasnachbehandlungseinrichtung für das in dem Abgas enthaltenen Stickoxid erreicht wird, jedoch gleichzeitig ein Austreten von Ammoniak aus der Abgasnachbehandlungseinrichtung auf ein zulässiges Maß begrenzt oder sogar gänzlich vermieden wird.

Grundsätzlich entsteht Ammoniak gemäß der vorstehend wiedergegebenen Sekundärreaktion bei Vorliegen von Kraftstoffüberschuss beziehungsweise Sauerstoffmangel in der Abgasnachbehandlungseinrichtung, falls also die Sauerstoffspeicher in der Abgasnachbehandlungseinrichtung nicht mehr genug Sauerstoff aufweisen beziehungsweise nicht mehr genug Sauerstoff abgeben können. Umgekehrt wird Ammoniak in der Abgasnachbehandlungseinrichtung abgebaut, insbesondere durch Oxidation, falls lokal in der Abgasnachbehandlungseinrichtung Sauerstoffüberschuss vorliegt, beispielsweise aufgrund hinreichend gefüllter Sauerstoffspeicher.

Zum Betreiben der Antriebseinrichtung dienen vorzugsweise unter anderem ein erstes Verbrennungsluftverhältnis und ein zweites Verbrennungsluftverhältnis. Das erste Verbrennungsluftverhältnis entspricht einem Verbrennungsluftverhältnis in dem Abgas stromaufwärts der Abgasnachbehandlungseinrichtung, also strömungstechnisch zwischen dem Antriebsaggregat und der Abgasnachbehandlungseinrichtung beziehungsweise dem ersten Fahrzeugkatalysator. Das zweite Verbrennungsluftverhältnis ist ein stromabwärts des ersten Fahrzeugkatalysators vorliegendes Verbrennungsluftverhältnis, beispielsweise ein strömungstechnisch zwischen dem ersten Fahrzeugkatalysator und dem zweiten Fahrzeugkatalysator vorliegendes Verbrennungsluftverhältnis.

Das erste Verbrennungsluftverhältnis wird beispielsweise mithilfe einer ersten Lambdasonde und das zweite Verbandsluftverhältnis beispielsweise mithilfe einer zweiten Lambdasonde ermittelt. Hierzu ist die erste Lambdasonde stromaufwärts der Abgasnachbehandlungseinrichtung und die zweite Lambdasonde stromabwärts des ersten Fahrzeugkatalysators, insbesondere strömungstechnisch zwischen dem ersten Fahrzeugkatalysator und dem zweiten Fahrzeugkatalysator, angeordnet. Beispielsweise werden die beiden Verbrennungsluftverhältnisse, also das erste Verbrennungsluftverhältnis und das zweite Verbrennungsluftverhältnis, zum Durchführen einer Lambdaregelung herangezogen. Hierbei wird insbesondere die Zusammensetzung des Kraftstoff-Frischgas-Gemischs anhand des ersten Verbrennungsluftverhältnisses eingestellt, wohingegen das zweite Verbandsluftverhältnis zur Korrektur des ersten Verbrennungsluftverhältnisses im Rahmen einer Trimmregelung verwendet wird.

Das erste Verbrennungsluftverhältnis wird beispielsweise unter Verwendung eines Messwerts der ersten Lambdasonde ermittelt. Zusätzlich wird ein Sensoroffset berücksichtigt, welcher eine Abweichung des Messwerts von dem tatsächlichen Verbrennungsluftverhältnis möglichst präzise beschreibt. Insbesondere ist das erste Verbrennungsluftverhältnis gleich einer Summe aus dem Messwert der ersten Lambdasonde und dem Sensoroffset oder das erste Verbrennungsluftverhältnis ergibt sich aus dem Messwert abzüglich des Sensoroffsets. In jedem Fall liegt das erste Verbrennungsluftverhältnis als Funktion des Messwerts der ersten Lambdasonde und des Sensoroffsets vor. Der Sensoroffset wird vorzugsweise im Rahmen der Trimmregelung ermittelt beziehungsweise angepasst.

Eine Weiterbildung der Erfindung sieht vor, dass als die wenigstens eine Zustandsgröße eine der folgenden Zustandsgrößen verwendet wird: Temperatur des ersten Fahrzeugkatalysators, Temperatur des zweiten Fahrzeugkatalysators und Istfüllstand eines Sauerstoffspeichers des zweiten Fahrzeugkatalysators. Während des Betreibens des Antriebsaggregats mit dem fetten Kraftstoff-Frischgas-Gemischt bestimmt die Temperatur des ersten Fahrzeugkatalysators maßgeblich die Bildung des Ammoniaks in diesem, während die Temperatur des zweiten Katalysators den Abbau des Ammoniaks beeinflusst. Für den Abbau des Ammoniak ist auch die Bereitstellung des für die Oxidation notwendigen Sauerstoffs von Bedeutung und entsprechend der Istfüllstand des Sauerstoffspeichers des zweiten Fahrzeugkatalysators.

Bevorzugt findet wenigstens die Temperatur des zweiten Fahrzeugkatalysators oder der Istfüllstand des Sauerstoffspeichers des zweiten Fahrzeugkatalysators als Zustandsgröße Verwendung. Besonders bevorzugt werden jedoch mehrere der genannten Größen, insbesondere die Temperatur des zweiten Fahrzeugkatalysators und der Istfüllstand des Sauerstoffspeichers des zweiten Fahrzeugkatalysators, herangezogen. Besonders bevorzugt wird zusätzlich die Temperatur des ersten Fahrzeugkatalysators berücksichtigt.

Hierdurch wird ein bedarfsgerechtes Betreiben des Antriebsaggregats zum Austragen von Sauerstoff aus den Fahrzeugkatalysatoren beziehungsweise ihren Sauerstoffspeichern erreicht.

Eine Weiterbildung der Erfindung sieht vor, dass die zweite Zeitspanne umso kürzer gewählt wird, je niedriger die Temperatur des zweiten Fahrzeugkatalysators und/oder je niedriger der Istfüllstand eines Sauerstoffspeichers des zweiten Fahrzeugkatalysators ist. Je niedriger die Temperatur des zweiten Fahrzeugkatalysators und je niedriger der Istfüllstand des Sauerstoffspeichers des zweiten Fahrzeugkatalysators sind, umso langsamer wird Ammoniak in dem zweiten Fahrzeugkatalysator durch Oxidation abgebaut. Durch das Kürzerwählen der zweiten Zeitspanne wird das Entstehen von Ammoniak in dem ersten Fahrzeugkatalysators verringert und an die Fähigkeit des zweiten Fahrzeugkatalysators zum Abbauen des Ammoniaks angeglichen. So wird zuverlässig sichergestellt, dass der Grenzwert für Ammoniak eingehalten wird.

Eine Weiterbildung der Erfindung sieht vor, dass die zweite Zeitspanne umso länger gewählt wird, je höher die Temperatur des ersten Fahrzeugkatalysators ist. Mit höheren Temperaturen des ersten Fahrzeugkatalysators verringert sich das Ausmaß, mit welchem Ammoniak in diesem gebildet wird. Die Bildungsrate von Ammoniak steigt zunächst ausgehend von einer niedrigeren ersten Temperatur bis hin zu einer höheren zweiten Temperatur an, um anschließend wieder in Richtung einer noch höheren dritten Temperatur wieder abzufallen. Die zweite Zeitspanne kann also umso länger gewählt werden, je weiter die Temperatur des ersten Fahrzeugkatalysators von der zweiten Temperatur abweicht, also von derjenigen Temperatur, bei welcher die Entstehungsrate des Ammoniak am größten ist. Hierdurch wird das bedarfsgerechte Wählen der Länge der zweiten Zeitspanne umgesetzt.

Eine Weiterbildung der Erfindung sieht vor, dass die zweite Zeitspanne bei Vorliegen einer Temperatur des zweiten Fahrzeugkatalysators, die kleiner ist als eine Schwellentemperatur, derart gewählt wird, dass der Istfüllstand des Sauerstoffspeichers des ersten Fahrzeugkatalysators den Sollfüllstand nicht erreicht. Ist die Temperatur des zweiten Fahrzeugkatalysators zu gering, um einen hinreichenden Abbau des Ammoniaks in ihm zu erreichen, so muss sichergestellt werden, dass kein oder lediglich eine geringe Menge an Ammoniak zu dem zweiten Fahrzeugkatalysator gelangt.

Dies wird erreicht, indem der Sauerstoffspeichers des ersten Fahrzeugkatalysators lediglich teilweise entleert wird, der in dem Sauerstoffspeicher zwischengespeicherte Sauerstoff also lediglich teilweise ausgetragen wird. Entsprechend wird die zweite Zeitspanne derart gewählt, dass der Istfüllstand des Sauerstoffspeichers nicht bis auf den Sollfüllstand absinkt, welcher zum Erreichen einer optimalen Konvertierungsleistung für Stickoxid eigentlich notwendig wäre. Folglich ist zwar die Konvertierungsleistung für das Stickoxid nicht optimal gewählt, es wird jedoch sichergestellt, dass der Grenzwert für das Ammoniak eingehalten wird.

Eine Weiterbildung der Erfindung sieht vor, dass der Sollfüllstand ein erster Sollfüllstand ist und die zweite Zeitspanne bei Vorliegen eines Istfüllstands des Sauerstoffspeichers des zweiten Fahrzeugkatalysators, der kleiner ist als ein zweiter Sollfüllstand, derart gewählt wird, dass der Istfüllstand des Sauerstoffspeichers des ersten Fahrzeugkatalysators den ersten Sollfüllstand nicht erreicht. Ist in dem Sauerstoffspeicher des zweitens Fahrzeugkatalysators nicht hinreichend Sauerstoff zwischengespeichert, um das Ammoniak durch Oxidation abzubauen, so soll die zweite Zeitspanne verkürzt werden. Entsprechend wird der erste Sollfüllstand durch den Istfüllstand des Sauerstoffspeichers des ersten Fahrzeugkatalysators zwar nicht erreicht, es ist jedoch sichergestellt, dass der Grenzwert für das Ammoniak eingehalten wird.

Eine Weiterbildung der Erfindung sieht vor, dass die zweite Zeitspanne bei Vorliegen einer Temperatur des ersten Fahrzeugkatalysators, die größer ist als eine weitere Schwellentemperatur, länger als eine Zeitspanne gewählt wird, die die zum Erreichen des Sollfüllstands durch den Istfüllstand des Sauerstoffspeichers des ersten Fahrzeugkatalysators hinreichend ist. Für die Temperatur des ersten Fahrzeugkatalysators wird die weitere Schwellentemperatur bestimmt. Ist die Temperatur größer als die weitere Schwellentemperatur, so wird davon ausgegangen, dass die Bildungsrate des Ammoniaks in dem ersten Fahrzeugkatalysator vergleichsweise gering ist. Entsprechend kann die zweite Zeitspanne länger gewählt werden als zum Erreichen des Sollfüllstands durch den Istfüllstand eigentlich notwendig ist. Folglich wird die zweite Zeitspanne derart gewählt, dass nicht nur Sauerstoff aus dem Sauerstoffspeicher des ersten Fahrzeugkatalysators ausgetragen wird, sondern zusätzlich auch aus dem Sauerstoffspeicher des zweiten Fahrzeugkatalysators. Hierdurch wird eine besonders gute Reduzierung der Stickoxidemission erzielt.

Eine Weiterbildung der Erfindung sieht vor, dass die Schwellentemperatur in Abhängigkeit von einer Reaktionsgeschwindigkeit einer Ammoniak abbauenden Abgasreaktion in dem zweiten Fahrzeugkatalysator und/oder die weitere Schwellentemperatur in Abhängigkeit von einer Reaktionsgeschwindigkeit einer Ammoniak erzeugenden Abgasreaktion in dem ersten Fahrzeugkatalysator gewählt wird. Die Reaktionsgeschwindigkeit der Ammoniak abbauenden Abgasreaktion ist von der Temperatur des zweiten Fahrzeugkatalysators und die Reaktionsgeschwindigkeit der Ammoniak erzeugenden Abgasreaktion von der Temperatur des ersten Fahrzeugkatalysators abhängig.

Die Schwellentemperatur wird derart gewählt, dass die Reaktionsgeschwindigkeit der Ammoniak abbauenden Abgasreaktion größer ist als eine Mindestreaktionsgeschwindigkeit. Beispielsweise beträgt die Schwellentemperatur mindestens 275 °C, mindestens 300 °C oder mindestens 350 °C. Die weitere Schwellentemperatur wird derart gewählt, dass die Reaktionsgeschwindigkeit der Ammoniak erzeugenden Abgasreaktion kleiner ist als eine Höchstreaktionsgeschwindigkeit. Beispielweise beträgt die weitere Schwellentemperatur mindestens 450 °C, mindestens 500 °C oder mindestens 600 °C. Mit der beschriebenen Vorgehensweise wird ein bedarfsgerechtes Austragen des Sauerstoffs aus der Abgasnachbehandlungseinrichtung umgesetzt.

Die Erfindung betrifft weiterhin eine Antriebsrichtung für ein Kraftfahrzeug, insbesondere zur Durchführung des Verfahrens gemäß den Ausführungen im Rahmen dieser Beschreibung, wobei die Antriebseinrichtung über ein Abgas erzeugendes Antriebsaggregat sowie eine Abgasnachbehandlungseinrichtung zur Nachbehandlung des Abgases mit einem ersten Fahrzeugkatalysator und einem strömungstechnisch in Reihe mit dem ersten Fahrzeugkatalysator geschalteten zweiten Fahrzeugkatalysator verfügt.

Dabei ist die Antriebsrichtung dazu vorgesehen und ausgestaltet, nach einem Betreiben des Antriebsaggregats mit einem mageren Kraftstoff-Frischgas-Gemisch über eine bestimmte erste Zeitspanne hinweg das Antriebsaggregat zum Einstellen eines Istfüllstands eines Sauerstoffspeichers des ersten Fahrzeugkatalysators in Richtung eines zur Reduzierung einer Stickoxidemission der Antriebseinrichtung gewählten Sollfüllstands über eine bestimmte zweite Zeitspanne hinweg mit einem fetten Kraftstoff-Frischgas-Gemisch zu betreiben, wobei die zweite Zeitspanne in Abhängigkeit von wenigstens einer Zustandsgröße der Fahrzeugkatalysatoren zur Reduzierung einer Ammoniakemission der Antriebseinrichtung gewählt wird.

Auf die Vorteile einer derartigen Ausgestaltung der Antriebseinrichtung sowie einer entsprechenden Vorgehensweise wurde bereits hingewiesen. Sowohl die Antriebseinrichtung für das Kraftfahrzeug als auch das Verfahren zu ihrem Betreiben können gemäß den Ausführungen im Rahmen dieser Beschreibung weitergebildet sein, sodass insoweit auf diese verwiesen wird.

Zudem betrifft die Erfindung ein Computerprogrammprodukt, umfassend Befehle, die bewirken, dass die Antriebseinrichtung gemäß den Ausführungen dieser Beschreibung die erläuterten Verfahrensschritte ausführt. Hinsichtlich der Vorteile und möglicher vorteilhafter Weiterbildungen wird in Gänze auf die Beschreibung verwiesen.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

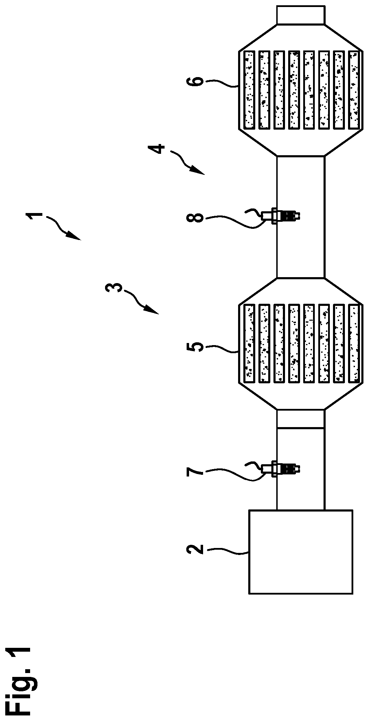

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur 1: eine schematische Darstellung eines Bereichs einer Antriebseinrichtung für ein Kraftfahrzeug.

Die Figur 1 zeigt eine schematische Darstellung einer Antriebseinrichtung 1, die über ein Antriebsaggregat 2, welches in Form einer Otto-Brennkraftmaschine vorliegt, sowie einen Abgastrakt 3 verfügt. Das Antriebsaggregat 2 beziehungsweise die Otto-Brennkraftmaschine verfügt vorzugsweise über mehrere Zylinder mit jeweils einem Brennraum. Jeder der Zylinder weist wenigstens ein Einlassventil und wenigstens ein Auslassventil auf. Über jedes der Einlassventile kann dem jeweiligen Zylinder Frischgas aus einem Frischgastrakt zugeführt werden, wohingegen durch jedes der Auslassventile Abgas aus dem entsprechenden Zylinder abgeführt werden kann, nämlich in Richtung des Abgastrakts 3. Der Abgastrakt 3 umfasst eine Abgasnachbehandlungseinrichtung 4, die einen ersten Fahrzeugkatalysator 5 sowie einen zweiten Fahrzeugkatalysator 6 aufweist. Die Fahrzeugkatalysatoren 5 und 6 sind strömungstechnisch in Reihe angeordnet, wobei der zweite Fahrzeugkatalysator 6 über den ersten Fahrzeugkatalysator 5 an das Antriebsaggregat 2 angebunden ist.

Strömungstechnisch zwischen dem Antriebsaggregat 2 und dem ersten Fahrzeugkatalysator 5 ist eine erste Lambdasonde 7 und strömungstechnisch zwischen den Fahrzeugkatalysator und 5 und 6 eine zweite Lambdasonde 8 angeordnet. Mithilfe der ersten Lambdasonde 7 wird ein stromaufwärts des ersten Fahrzeugkatalysators 5 in dem Abgas vorliegender erster Restsauerstoffgehalt und entsprechend ein erstes Verbrennungsluftverhältnis des Abgases bestimmt. Die zweite Lambdasonde 8 dient hingegen dazu, einen zweiten Restsauerstoffgehalt und entsprechend ein zweites Verbrennungsluftverhältnis des Abgases strömungstechnisch zwischen den Fahrzeugkatalysatoren 5 und 6 zu ermitteln.

Es ist vorgesehen, dass nach einem Betreiben des Antriebsaggregats 2 mit einem mageren Kraftstoff-Frischgas-Gemisch über eine bestimmte erste Zeitspanne hinweg das zweite Antriebsaggregat über eine bestimmte zweite Zeitspanne hinweg mit einem fetten Kraftstoff-Frischgas-Gemisch betrieben wird. Dies gilt insbesondere, falls die erste Zeitspanne eine bestimmte Länge überschreitet, also eine Länge der ersten Zeitspanne größer ist als ein Schwellenwert. Unter der ersten Zeitspanne ist grundsätzlich eine beliebige Zeitspanne zu verstehen. Es kommt lediglich darauf an, dass das Antriebsaggregat 2 während der ersten Zeitspanne derart betrieben wird, dass Sauerstoff in die Fahrzeugkatalysatoren 5 und 6 eingetragen und dort zwischengespeichert wird.

Das Betreiben des Antriebsaggregats 2 mit dem fetten Kraftstoff-Frischgas-Gemisch dient dem Austragen des Sauerstoffs aus Sauerstoffspeichern der Fahrzeugkatalysatoren 5 und 6, welcher zuvor während des Betreibens des Antriebsaggregats 2 mit dem mageren Kraftstoff-Frischgas-Gemisch in diese eingetragen wurde. Je niedriger der Istfüllstand eines Sauerstoffspeichers der Fahrzeugkatalysatoren 5 und 6 ist, umso effektiver wird Stickoxid in den Fahrzeugkatalysatoren 5 und 6 konvertiert. Während des Betreibens des Antriebsaggregats 2 mit dem fetten Kraftstoff-Frischgas-Gemisch fällt jedoch in den Fahrzeugkatalysatoren 5 und 6 Ammoniak an, für welches ebenfalls ein Grenzwert einzuhalten ist.

Aus diesem Grund kann es vorgesehen sein, das Betreiben mit dem fetten Kraftstoff-Frischgas-Gemisch vorzunehmen, bis dieses mithilfe der zweiten Lambdasonde 8 festgestellt wird. Je nach Zustand des zweiten Fahrzeugkatalysators 6 kann eine solche Vorgehensweise jedoch dazu führen, dass in dem ersten Fahrzeugkatalysator 5 erzeugtes Ammoniak durch den zweiten Fahrzeugkatalysator 6 hindurchtreten und in eine Außenumgebung der Antriebseinrichtung 1 gelangen kann. Um dies zu verhindern, soll das Austragen des Sauerstoffs aus den Sauerstoffspeichern bedarfsgerecht vorgenommen werden. Hierzu wird die zweite Zeitspanne in Abhängigkeit von wenigstens einer Zustandsgröße der Fahrzeugkatalysatoren 5 und 6 gewählt, um hierdurch die Ammoniakemission der Antriebseinrichtung 1 zu reduzieren.

### BEZUGSZEICHENLISTE:

- 1: Antriebseinrichtung
- 2: Antriebsaggregat
- 3: Abgastrakt
- 4: Abgasnachbehandlungseinrichtung
- 5: 1. Fahrzeugkatalysator
- 6: 2. Fahrzeugkatalysator
- 7: 1. Lambdasonde
- 8: 2. Lambdasonde

## Patentansprüche

1. Verfahren zum Betreiben einer Antriebseinrichtung (1) für ein Kraftfahrzeug, die über ein Abgas erzeugendes und als Otto-Brennkraftmaschine ausgestaltetes Antriebsaggregat (2) sowie eine Abgasnachbehandlungseinrichtung (4) zur Nachbehandlung des Abgases mit einem ersten Fahrzeugkatalysator (5) und einem strömungstechnisch in Reihe mit dem ersten Fahrzeugkatalysator (5) geschalteten zweiten Fahrzeugkatalysator (6) verfügt, **dadurch gekennzeichnet, dass** nach einem Betreiben des Antriebsaggregats (2) mit einem mageren Kraftstoff-Frischgas-Gemisch über eine bestimmte erste Zeitspanne hinweg das Antriebsaggregat (2) zum Einstellen eines Istfüllstands eines Sauerstoffspeichers des ersten Fahrzeugkatalysators (5) in Richtung eines zur Reduzierung einer Stickoxidemission der Antriebseinrichtung (1) gewählten Sollfüllstands über eine bestimmte zweite Zeitspanne hinweg mit einem fetten Kraftstoff-Frischgas-Gemisch betrieben wird, wobei die zweite Zeitspanne in Abhängigkeit von mindestens einer Zustandsgröße der Fahrzeugkatalysatoren (5, 6) zur Reduzierung einer Ammoniakemission der Antriebsrichtung (1) gewählt wird.

2. Verfahren nach Anspruch 1, **dadurch gekennzeichnet, dass** als die wenigstens eine Zustandsgröße eine der folgenden Zustandsgrößen verwendet wird: Temperatur des ersten Fahrzeugkatalysators (5), Temperatur des zweiten Fahrzeugkatalysators (6) und Istfüllstand eines Sauerstoffspeichers des zweiten Fahrzeugkatalysators (6).

3. Verfahren nach einem der vorhergehenden Ansprüche, **dadurch gekennzeichnet, dass** die zweite Zeitspanne umso kürzer gewählt wird, je niedriger die Temperatur des zweiten Fahrzeugkatalysators (6) und/oder je niedriger der Istfüllstand des Sauerstoffspeichers des zweiten Fahrzeugkatalysators (6) ist.

4. Verfahren nach einem der vorhergehenden Ansprüche, **dadurch gekennzeichnet, dass** die zweite Zeitspanne umso länger gewählt wird, je höher die Temperatur des ersten Fahrzeugkatalysators (5) ist.

5. Verfahren nach einem der vorhergehenden Ansprüche, **dadurch gekennzeichnet, dass** die zweite Zeitspanne bei Vorliegen einer Temperatur des zweiten Fahrzeugkatalysators (6), die kleiner ist als eine Schwellentemperatur, derart gewählt wird, dass der Istfüllstand des Sauerstoffspeichers des ersten Fahrzeugkatalysators (5) den Sollfüllstand nicht erreicht.

6. Verfahren nach einem der vorhergehenden Ansprüche, **dadurch gekennzeichnet, dass** der Sollfüllstand ein erster Sollfüllstand ist und die zweite Zeitspanne bei Vorliegen eines Istfüllstands eines Sauerstoffspeichers des zweiten Fahrzeugkatalysators (6), der kleiner ist als ein zweiter Sollfüllstand, derart gewählt wird, dass der Istfüllstand des Sauerstoffspeichers des ersten Fahrzeugkatalysators (5) den ersten Sollfüllstand nicht erreicht.

7. Verfahren nach einem der vorhergehenden Ansprüche, **dadurch gekennzeichnet, dass** dass die zweite Zeitspanne bei Vorliegen einer Temperatur des ersten Fahrzeugkatalysators (5), die größer ist als eine weitere Schwellentemperatur, länger als eine Zeitspanne gewählt wird, die zum Erreichen des Sollfüllstands durch den Istfüllstand des Sauerstoffspeichers des ersten Fahrzeugkatalysators (5) hinreichend ist.

8. Verfahren nach einem der vorhergehenden Ansprüche, **dadurch gekennzeichnet, dass** die Schwellentemperatur in Abhängigkeit von einer Reaktionsgeschwindigkeit einer Ammoniak abbauenden Abgasreaktion in dem zweiten Fahrzeugkatalysator (6) und/oder die weitere Schwellentemperatur in Abhängigkeit von einer Reaktionsgeschwindigkeit einer Ammoniak erzeugenden Abgasreaktion in dem ersten Fahrzeugkatalysator (5) gewählt wird.

9. Antriebseinrichtung (1) für ein Kraftfahrzeug, insbesondere zur Durchführung des Verfahrens nach einem oder mehreren der vorhergehenden Ansprüche, wobei die Antriebseinrichtung (1) über ein Abgas erzeugendes Antriebsaggregat (2) sowie eine Abgasnachbehandlungseinrichtung (4) zur Nachbehandlung des Abgases mit einem ersten Fahrzeugkatalysator (5) und einem strömungstechnisch in Reihe mit dem ersten Fahrzeugkatalysator (5) geschalteten zweiten Fahrzeugkatalysator (6) verfügt, **dadurch gekennzeichnet, dass** die Antriebseinrichtung (1) dazu vorgesehen und ausgestaltet ist, nach einem Betreiben des Antriebsaggregats (2) mit einem mageren Kraftstoff-Frischgas-Gemisch über eine bestimmte erste Zeitspanne hinweg das Antriebsaggregat (2) zum Einstellen eines Istfüllstands eines Sauerstoffspeichers des ersten Fahrzeugkatalysators (5) in Richtung eines zur Reduzierung einer Stickoxidemission der Antriebseinrichtung (1) gewählten Sollfüllstands über eine bestimmte zweite Zeitspanne hinweg mit einem fetten Kraftstoff-Frischgas-Gemisch zu betreiben, wobei die zweite Zeitspanne in Abhängigkeit von mindestens einer Zustandsgröße der Fahrzeugkatalysatoren (5, 6) zur Reduzierung einer Ammoniakemission der Antriebseinrichtung (1) gewählt wird.

10. Computerprogrammprodukt, umfassend Befehle, die bewirken, dass die Antriebseinrichtung (1) nach Anspruch 9 die Verfahrensschritte nach einem oder mehreren der Ansprüche 1 bis 8 ausführt.
